# EUROPÄISCHE PATENTSCHRIFT

(11) **EP 2 762 391 B1**
(45) Veröffentlichungstag und Bekanntmachung des Hinweises auf die Patenterteilung: **09.10.2019**
(21) Anmeldenummer: 13196038.7
(22) Anmeldetag: 06.12.2013
(51) Int. Cl.: B62D 27/02, B62D 65/02, F16B 11/00, B62D 65/06

(54) **Arretierende Positionierhilfe von geklebten Karosseriebauteilen**
Positioning stopper for gluing body parts
Cale de positionnement pour l'encollage de pièce de carrosserie

(30) Priorität: 31.01.2013 DE 102013001671
(43) Veröffentlichungstag der Anmeldung: 06.08.2014
(73) Patentinhaber: Volkswagen Aktiengesellschaft, 38440 Wolfsburg (DE)
(72) Erfinder: Wolff, Jasper, 38102 Braunschweig (DE); Oscenda, Nils, 38440 Wolfsburg (DE); Slaninka, Anton, 85102 Bratislava (SK); Bleich, Bernhard, 38448 Wolfsburg (DE)

(56) Entgegenhaltungen:
- EP-A1- 1 296 068
- DE-A1- 3 202 594
- DE-A1- 10 237 322
- DE-A1-102008 054 206
- DE-U1-202010 016 886

## Beschreibung

Die Erfindung betrifft eine Fügeanordnung von mindestens zwei Karosseriebauteilen eines Fahrzeugs mit einem ersten Fügebauteil und zumindestens einem zweiten Fügebauteil, wobei mindestens eine Haltevorrichtung zur Verbindung vorgesehen ist. Diese Haltevorrichtung ermöglicht eine arretierende Verbindung zwischen den Karosseriebauteilen. Des Weiteren befindet sich zwischen den Bauteilen im Fügebereich ein zuvor aufgebrachter Kleber.

Aus der WO2010/127884 ist eine Fügeanordnung zum Fügen von Fügepartnern eines Fahrzeugs bekannt. Es wird ein Fügepartner mit mindestens einem zweiten Fügepartner über eine Haltevorrichtung verbunden. Der Kleber ist hier vorher innerhalb des Halteelementes aufgetragen, wobei die Positionierung in einer Richtung solange erfolgen kann, wie der Kleber nicht ausgehärtet ist. Auch hierbei werden vorkonfektionierte Baugruppen eines Fahrzeuges in eine genau definierte Lage zu einem Karosserieteil des Fahrzeuges ausgerichtet. Hier werden insbesondere die Baugruppen Frontendmodul, Rearendmodul, Heckklappe, Türmodul, Stoßfänger, insbesondere Stoßfängerüberzug an ein Karosserieteil des Fahrzeugs benannt, außerdem Leuchteinheiten mit oder ohne Montageträger und/oder einer Cockpiteinheit im Fahrzeug. Bei diesem Verfahren ist eine Veränderung der Lage der Karosseriebauteile zueinander durch leichte Krafteinwirkung möglich. Die Gewichtskraft eines Bauteils würde ausreichen eine Verlagerung zu bewirken. Darin besteht auch der Nachteil dieses Verfahrens, dass es nicht für eine Ausrichtung in oder gegen die z-Achse geeignet ist. Die z-Achse bezeichnet im Fahrzeugbau allgemein die Achse durch die Fahrzeugmitte als Normale zum gedachten Straßenverlauf also senkrecht zur Fahrzeugdachmitte.

Aus der DE 10 2008 054 206 A1 ist eine Fügeanordnung von mindestens zwei Karosseriebauteilen eines Fahrzeuges mit einem ersten Fügebauteil und einem zweiten Fügebauteil bekannt. Zu diesem Zweck ist eine Haltevorrichtung zur arretierbaren Verbindung vorgesehen. Weiterhin ist zusätzlich mindestens eine Klebestelle an den Fügebereichen der Fügebauteile vorgesehen, so dass zumindest in einem Bereich miteinander verklebte Fügebauteile in ihrer Positionierung zueinander während des Aushärtevorgangs des Klebers durch die Haltevorrichtung fixiert sind.

Die DE 32 02 594 A1 lehrt eine Kraftfahrzeugkarosserie mit einem fest verbundenen Dach aus Verbundwerkstoff, welches auf einem Rahmenbereich aufliegt und mit diesem durch Kleben fest verbunden ist. Es wird hier eine Fixierung zwischen dem Dach und dem Rahmenbereich gewährleistet.

Bisher war eine klebende Verbindung zweier Karosseriebauteile nicht exakt zueinander positionierbar, da der Kleber im Laufe des Aushärtevorganges noch nachgibt, schrumpft oder sich auf andere Weise verformt. Durch die nun zusätzlich eingebrachten Halteelemente ist eine exakte Positionierung von den Karosseriebauteilen zueinander gesichert. Es findet keine Änderung der Position während des Aushärtevorganges mehr statt, da die Haltevorrichtungen nur unter Krafteinwirkung in Position gebracht werden können. Die Haltevorrichtungen verbleiben an den Bauteilen.

Aufgabe der vorliegenden Erfindung ist es, eine Fügeanordnung zum Fügen von Karosseriebauteilen zu schaffen, bei der die Positionierung der Bauteile zueinander sichergestellt ist.

Der besondere Vorteil des Verfahrens ist, dass selbst sehr große Karosseriebauteile unter gesicherten Toleranzwerten aneinander gefügt werden können und dies auch mit einem Kleber, der erst nach der Aushärtephase seine Viskosität weitgehend verliert und deshalb alleine verwendet eine sichere Positionierung nicht gewährleisten könnte.

Zur Lösung dieser Aufgabe wird eine Fügeanordnung mit den Merkmalen des Anspruches 1 und ein Verfahren zum Fügen mit den Merkmalen des Anspruchs 9 vorgeschlagen. In den abhängigen Ansprüchen sind bevorzugte Weiterbildungen ausgeführt.

Erfindungsgemäß ist eine Fügeanordnung von mindestens zwei Karosseriebauteilen eines Fahrzeuges mit einem ersten Fügebauteil und zumindest einem zweiten Fügebauteil vorgeschlagen, wobei mindestens eine Haltevorrichtung zur arretierbaren Verbindung vorgesehen ist. Die Haltevorrichtung stellt bei dieser Fügeanordnung sicher, dass der zwischen den Karosseriebauteilen eingefügte Kleber aushärtet, ohne dass sich die Position der Bauteile durch Nachgeben des Klebers während des Aushärtens verändert. Zumindest eine Haltevorrichtung weist einen Stift und ein Gegenstück auf, die über ein dazwischenliegendes Halteelement miteinander verbunden sind.

Vorteil dieser Erfindung ist, dass die Positionierung durch die Haltevorrichtung mit dem Zeitpunkt des Zusammenfügens sichergestellt ist. Der Kleber kann an anderen Stellen und/oder an den Haltelementen, in flächiger oder punktueller Form oder die gesamten Fügebereiche abdichtend aufgebracht sein.

Insbesondere weist die Fügeanordnung zwei, drei oder vorzugsweise vier Haltevorrichtungen auf. Vorteilhaft sind für sehr große Karosseriebauteile auch mehr Haltevorrichtungen im Fügebereich der Karosseriebauteile vorgesehen, so dass eine exakte Positionierung auch über große Fügebereiche sichergestellt ist.

Bevorzugt ist zumindest eine Haltevorrichtung ein- oder mehrteilig ausgeführt. Die einteilige Haltevorrichtung ist als Stift an einem der beiden Fügebauteile mit einer Lochung am anderen Fügebauteil denkbar, so dass der Stift als Halteelement in der Lochung befestigt wird. Vorteilhaft ist eine einteilige Haltevorrichtung als plastisch verformbares Halteelement umgesetzt, das so weit verformt wird, bis eine gewünschte definierte Position der beiden Fügebauteile zueinander erreicht ist.

Eine zweiteilige Ausführung der Haltevorrichtung weist insbesondere einen Stift und ein Halteelement auf, wobei das Halteelement und der Stift, durch Reibschluss oder Formschluss die genaue Positionierung der Fügebauteile sicherstellen.

Eine dreiteilige Ausführung weist bevorzugt einen Stift oder ein erstes Halteelement, ein zweites Halteelement oder Gegenstück und ein Verbindungsteil zwischen den beiden Halteelementen auf, wobei das Verbindungselement auch plastisch verformbar sein kann. Hierbei sind reibschlüssige und/oder formschlüssige Verbindungen, die in allen Kombinationen möglich sind, vorzusehen.

Das reibschlüssige Rasten und die plastische Verformung der Halteelemente ermöglicht eine stufenlose Positionierung, wohingegen das formschlüssige Rasten eine Positionierung in den Abstufungen der Abstände der Rastelemente in den Halteelementen vorsieht.

Eine weitere Ausführungsform sieht ein Fügeverfahren für Karosseriebauteile mittels einer chemischen Reaktion einer Ein- oder Mehrkomponentenmasse vor.

Bevorzugt sind die Halteelemente nur durch eine Kraft verschiebbar, die grösser ist als die Kraft durch die Wirkung der Schwerkraft der Karosseriebauteile. Die Karosseriebauteile sind damit nicht nur durch ihre Gewichtskraft allein zueinander beweglich.

Besonders vorteilhaft an diesen Haltevorrichtungen ist, dass sie nicht nur zeitlich begrenzt die Positionierung solange sicherstellen, wie der Kleber viskos ist, sondern dass sie auch nach Aushärten des Klebers im Fahrzeug verbleiben.

Die Fügeanordnung weist Karosseriebauteile auf, insbesondere ein Fahrzeugdach vorzugsweise aus einem Metallblech bestehend. Das Fahrzeugdach weist eine Auslassung für das Panoramadach auf, das vorzugsweise aus durchsichtigem oder teildurchsichtigem Kunststoff oder Glas besteht. Für diese Ausführung ist ein Klebebereich vorgesehen. Der Kleber ist bevorzugt umlaufend um den äußeren Rand des in das Karosseriedach einzufügenden Panoramadaches abdichtend angebracht, so dass die Klebenaht auch gleichzeitig gegen das Eindringen von Regen- oder Waschwasser von außen in das Fahrzeuginnere schützt.

Des Weiteren wird erfindungsgemäß ein Verfahren zum Fügen von Karosseriebauteilen eines Fahrzeugs mit einem ersten Karosseriebauteil und mindestens einem zweiten Karosseriebauteil mit einer erfindungsgemäßen Fügeanordnung vorgeschlagen, wobei mindestens eine Haltevorrichtung vorgesehen ist. Gekennzeichnet wird das Verfahren dadurch, dass die mindestens eine Haltevorrichtung eine arretierbare Verbindung zwischen den Karosseriebauteilen sicherstellt. Dazu wird auf mindestens einem Karosseriebauteil an zumindest einer Klebestelle in dem zu fügenden Bereich Kleber aufgetragen und das zweite Karosseriebauteil unter Benetzung mit dem Kleber und Arretierung des ersten und zweiten Karosseriebauteils zueinander mittels der zumindest einer Haltevorrichtung positioniert. Der zur Positionierung notwendige Kraftaufwand ist bevorzugt deutlich höher als die durch das Gewicht eines der beiden Karosseriebauteile eingebrachte Kraft, so dass durch das Eigengewicht des oben aufliegenden Karosseriebauteils, die Haltevorrichtung in seiner Positionierung nicht veränderbar sein darf.

Der Kleber wird insbesondere flächig, punktuell oder über den gesamten Kontaktbereich, einseitig oder auf beiden Kontaktseiten aufgebracht, wobei zumindest eine Haltevorrichtung vor oder nach dem Auftrag des Klebers angebracht wird.

Nachdem der Kleber und die zumindest eine Haltevorrichtung aufgebracht bzw. platziert sind, werden die Karosseriebauteile zunächst über die zumindest eine Haltevorrichtung verbunden und dann soweit aufeinander gedrückt bis die gewünschte Position erreicht ist. Wirkt keine Kraft mehr von außen ein, so verändert sich auch die Position der Karosseriebauteile nicht mehr zueinander. Anschließend beginnt die Aushärtephase des Klebers und die Karosseriebauteile bleiben zueinander in der erwünschten Weise positioniert.

Die exakte Ausrichtung der Karosseriebauteile zueinander erfolgt vorteilhaft mittels eines Manipulators oder mit Hilfe eines Roboters wobei die vorbestimmte Position jeweils mit der tatsächlichen Position abgeglichen wird. Dies erfolgt vorteilhaft mittels elektrischer oder photoelektrischer Sensoren. Des Weiteren sind pneumatische Sensoren oder eine Abstandsdetektion unter Ausnutzung des Hall-Effektes zur Positionsbestimmung denkbar.

Das Verfahren ist im vorliegenden Fall dazu geeignet ein Karosseriebauteil derartig an das zweite Karosseriebauteil eines Kraftfahrzeuges anzufügen, dass die Bauteile formschlüssig miteinander eine stetig verlaufende Fläche bzw. Flächenkontur bilden.

Bevorzugt um eine exakte Positionierung der Karosseriebauteile zueinander sicherzustellen ist die Verwendung eines zweiteiligen Greifmittels, bestehend aus einem Innen- und einem Außenrahmen, möglich. Durch diese Greifmittel wird die Endlage eines Manipulators so festgelegt, dass das erste Karosseriebauteil an der Kontur des zweiten Karosseriebauteils referenziert wird.

Bevorzugt wird mit dem erfindungsgemäßen Verfahren die Montage eines Panoramadaches an das Karosseriedach eines Kraftfahrzeuges durchgeführt.

Weitere Vorteile, Merkmale und Einzelheiten der Erfindung ergeben sich aus der nachfolgenden Beschreibung, in der unter Bezugnahme auf die Zeichnungen ein mögliches Ausführungsbeispiel der Erfindung im Einzelnen beschrieben ist. Es zeigen:
Fig. 1 eine perspektivische Darstellung einer Fügeanordnung am Beispiel eines Fahrzeugdaches, wobei ein erstes Karosseriebauteil durch das Fahrzeugdach und ein zweites Karosseriebauteil durch das Panoramadach gebildet wird,
Fig. 2 eine Draufsicht auf die Fügeanordnung nach Fig. 1,
Fig. 3 eine Schnittdarstellung gemäß Schnitt A - A in Fig. 2,
Fig. 4 ein Detail X aus dem Schnitt A - A aus Fig. 3,
Fig. 5 eine Schnittdarstellung gemäß einer ersten Ausführung der Fügeanordnung mit einer einteiligen Haltevorrichtung und formschlüssiger Arretierung,
Fig. 6 eine Schnittdarstellung gemäß einer zweiten Ausführung der Fügeanordnung mit einer zweiteiligen Haltevorrichtung und formschlüssiger Arretierung,
Fig. 7 eine Schnittdarstellung gemäß einer dritten Ausführung der Fügeanordnung mit einer dreiteiligen Haltevorrichtung und formschlüssiger Arretierung,
Fig. 8 eine Schnittdarstellung gemäß einer vierten Ausführung der Fügeanordnung mit einer zweiteiligen Haltevorrichtung und reibschlüssiger Arretierung,
Fig. 9a, 9b eine Schnittdarstellung gemäß einer fünften Ausführung der Fügeanordnung mit einer einteiligen Haltevorrichtung und arretierend mittels eines plastisch verformbaren Halteelements vor und nach der Verformung,
Fig. 10 eine Schnittdarstellung durch die Fügeanordnung mit einem Manipulator,
Fig. 11 ein Detail Y aus der Schnittdarstellung durch die Fügeanordnung mit einem Manipulator und Stellantrieb in der Detailansicht,
Fig. 12 ein Detail Y aus der Schnittdarstellung durch die Fügeanordnung mit einem Manipulator ohne Nachstellen in der Detailansicht,

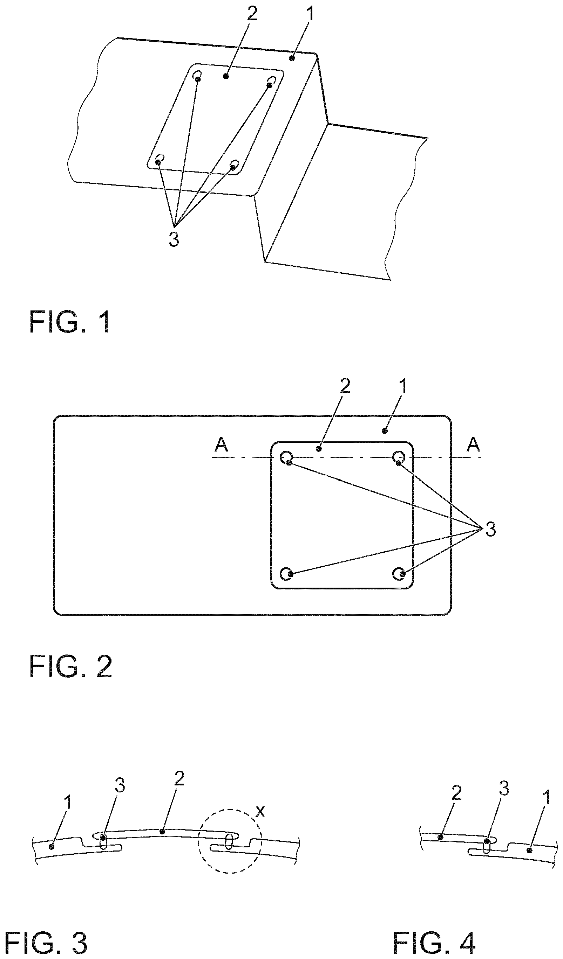

Fig. 1 zeigt eine perspektivische Darstellung einer Fügeanordnung am Beispiel eines Fahrzeugdaches 1 mit einem Panoramadach 2, wobei ein erstes Karosseriebauteil durch das Fahrzeugdach 1 und ein zweites Karosseriebauteil durch das Panoramadach 2 gebildet ist. Das Fahrzeugdach 1 besteht vorzugsweise aus tiefgezogenem Metall, insbesondere Stahlblech oder aus Kunststoff und ist nicht durchsichtig. Das Panoramadach 2 besteht aus Kunststoff oder Glas und ist durchsichtig oder teildurchsichtig insbesondere getönt.

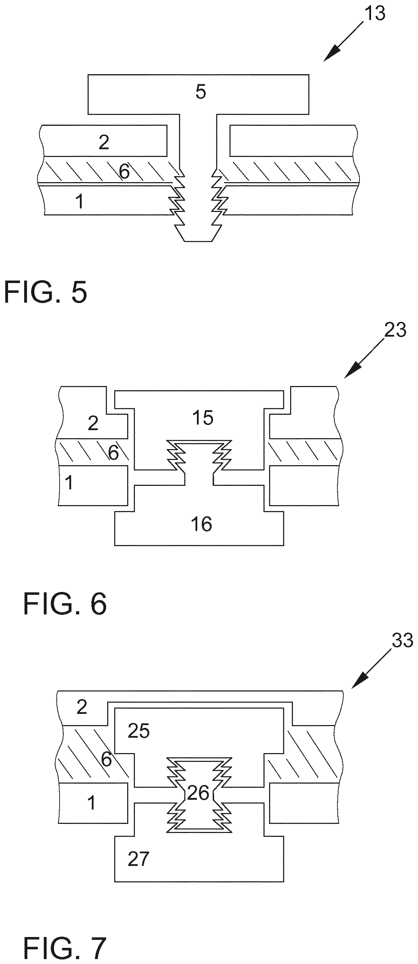

Des Weiteren sind in diesem Ausführungsbeispiel vier Haltevorrichtungen 3 in den abgerundeten Eckbereichen des Panoramadachs vorgesehen, deren mögliche Ausgestaltung in den Figuren 5 bis 9 dargestellt ist. Es ist eine unterschiedliche Anzahl von Haltevorrichtungen 3 für unterschiedlichste Fügeaufgaben in der Montage von Karosseriebauteilen denkbar. Bei sehr kleinen Bauteilen, die an einem zweiten Karosseriebauteil befestigt werden sollen, ist gegebenenfalls eine einzelne Haltevorrichtung 3 ausreichend. Die erfindungsgemäße Haltevorrichtung 3 zur Ergänzung einer geklebten Fügung ist besonders geeignet für eine genaue Angleichung zweier Bauteile in Z-Richtung, die der Oberflächennormalen auf dem Fahrzeugdach entspricht, da das zweite Bauteil so lange in Schwerkraftrichtung gedrückt werden kann, bis es in der gewünschten Position liegt, bzw. dass Karosseriedach und Panoramadach gemeinsam, abgesehen von den Übergangsbereichen, eine stetige Dachfläche ohne Sprünge in Z-Richtung bildet, wobei die Z-Richtung im Fahrzeugbau die Oberflächennormale zum Fahrzeugdachmittelpunkt ist. Da für das Zusammendrücken der Haltevorrichtungen 3 eine größere Kraft nötig ist als durch die Gewichtskraft des zweiten Karosseriebauteiles eingetragen wird, ist sichergestellt, dass allein durch die Gewichtskraft, in diesem Falle des Panoramadaches 2, keine Veränderung der Position mehr möglich ist. Das Verfahren ist daher für alle Fügeaufgaben besonders geeignet, bei denen der Abstand der zu fügenden Karosseriebauteile genau vorgegeben ist. Dies kann für Bauteile in beliebiger Größe sichergestellt werden, da lediglich die Anzahl der Haltevorrichtungen 3 an die Größe des Bauteiles oder der Bauteile und der gewünschten Toleranzgenauigkeiten angepasst werden muss.

Fig. 2 zeigt die Draufsicht der in Fig. 1 dargestellten Baugruppe und Fig. 3 einen seitlichen Schnitt gemäß A-A in Fig. 2 . In dem Karosseriedach 1 ist eine Öffnung für das Panoramadach 2 vorgesehen, wobei das Panoramadach 2 überlappend auf dieser Öffnung des Karosseriedaches 1 angeordnet ist, so dass vollumfänglich das Karosseriedach 1 mit dem Panoramadach 2 über eine lückenlose Auflagefläche zusammen gefügt werden kann. Damit bei einer überlappenden Ausführung der beiden Karosseriebauteile 1, 2 die Flächen trotzdem stetig verlaufen, ist die Ausführung des Karosseriedaches 1 im Überlappungsbereich derartig verjüngt, das heißt in diesem Bereich dünner ausgestaltet, dass das Panoramadach genau in die dadurch entstandene Vertiefung passt. Die beiden Karosseriebauteile 1,2 bilden eine einzige stetig verlaufende Fläche. Die Verjüngung wäre stattdessen ebenfalls im Panoramadach 2 denkbar. Eine dritte Ausführungsart ist möglich, indem beide Karosseriebauteile 1, 2 im Überlappungsbereich verjüngt sind, so dass wiederum beide Flächen von Karosseriedach 1 und Panoramadach 2 eine stetig ineinander laufende Fläche bilden. Es kann während der Gebrauchsphase des Kraftfahrzeuges kein Regen- oder Waschwasser von außen nach innen eindringen, da der Klebebereich 6 stoffschlüssig und abdichtend ist.

In Fig. 5 bis 9 sind detailliert unterschiedliche Ausführungsbeispiele für die Ausgestaltung der Haltevorrichtungen 3 dargestellt, wobei die Ausführungsbeispiele in den Figuren 5 bis 8 so dargestellt sind, dass beide Karosseriebauteile 1,2 von den Halteelementen 5, 15, 16, 35 durchdrungen werden und die Kopfbereiche der Haltelemente 5, 16, 27, 35, die ein weiteres Durchdringen der Haltelemente 5, 16, 27, 35 durch die Karosseriebauteile 1, 2 verhindern, erhaben über den Karosseriebauteilen angeordnet sind. Außerdem ist hier eine in der Figur 6 dargestellte Ausführung denkbar, bei der der Kopfbereich des Halteelements 15 in eine Vertiefung des Karosseriebauteils eingelassen wurde, so dass beide miteinander eine stetige Fläche bilden. Eine vorteilhafte Ausführung, die hier in Figur 7 dargestellt ist, besteht darin dass das Halteelement 25 das Karosseriebauteil 2 nicht durchdringt, sondern an dessen Unterseite befestigt ist und auf diese Weise beide Karosseriebauteile 1, 2 miteinander verbindet. Hierbei kann das Halteelement an der Karosserie befestigt sein oder in einer für das Halteelement vorgesehene Vertiefung im Karosseriebauteil angebracht sein. Diese drei unterschiedlichen Anbindungen an den Karosseriebauteilen sind in den Figuren 5 bis 8 beispielhaft dargestellt und sind in jeder Kombination denkbar.
Das erste oder zweite Karosseriebauteil ist im Folgenden beispielhaft als Karosseriebauteil-Dach 1 als auch das Panoramadach 2 bezeichnet, kann aber überall im Fahrzeugbau Anwendung finden.

In Fig. 5 ist eine erste Ausführungsform einer einteilige Haltevorrichtung 13 gezeigt, die aus einem einzigen Halteelement 5 besteht. Das Halteelement 5 besteht aus einem stiftförmigen Bereich, der seiner Größe nach durch die Öffnungen der Karosseriebauteile passt und einem Kopfbereich, der aufgrund seiner Größe ein tieferes Eindringen in das Karosseriebauteil 2 ausschließt. Das Karosseriedach 1 ist im Übergangsbereich, in dem sich beide Karosseriebauteile 1,2 überlappen, unterhalb des Panoramadachs 2 angeordnet. Dazwischen ist eine Schicht Kleber 6 angeordnet. Im Panoramadach 2 ist eine Öffnung vorgesehen, durch die das Halteelement 5 widerstandsfrei durchzuführen ist. In Gegensatz dazu ist im Karosseriedach 1 die Öffnung derart vorgesehen, dass das Halteelement 5 gegen einen Widerstand in die Öffnung gedrückt wird. Die am Haltelement 5 vorgesehenen Rastzähne längs des Halteelements 5 verhaken sich formschlüssig im Karosseriedach 1. Bei einer formschlüssigen Haltevorrichtung 3 sind eingearbeitete Stufen, Rasten oder Zähne in Längsrichtung des Halteelements 5 vorhanden, so dass die Rasten eines Halteelementes 5 von einer zur nächsten Stufe, in diesem Fall in dem Karosseriedach 1, springt.

In Fig. 6 ist eine zweite Ausführungsform einer zweiteiligen Haltevorrichtung 23 gezeigt, wobei ein erstes Halteelement 16 in einem zweiten Halteelement 15 verankert ist. Die Verankerung der Haltelemente 15 und 16 ist auch hier durch Rastzähne längs der Halteelemente 15, 16 vorgesehen, die sich formschlüssig ineinander verhaken, wobei das Halteelement 16 in eine Öffnung des Halteelementes 15 eingefügt wird. Das Halteelement 15 weist die in Längsrichtung angeordneten Rastzähnchen an seiner Innenseite auf und das Halteelement 16 an seiner Außenseite. Die Halteelemente 15 und 16 bestehen aus einem stiftförmigen Bereich, der sich durch die vorgesehenen Öffnungen in den Karosseriebauteilen 1 und 2 bewegen lässt und einem Kopfteil, der eine weitere Bewegung der Halteelemente 15 und 16 durch diese Öffnungen verhindert indem er aufgrund seiner Größe mit den Karosseriebauteilen einen Anschlag bildet. Das Panoramadach hat in diesem Ausführungsbeispiel eine Vertiefung, so dass der Kopf des Halteelements 15 vollständig in dieser Vertiefung liegt und mit dem Panoramadach eine einheitliche Fläche bildet. Das Karosseriedach 1 ist im Übergangsbereich der Karosseriebauteile 1, 2 unterhalb des Panoramadachs 2 mit einer dazwischen liegenden Schicht Kleber 6 angeordnet. In beiden Karosseriebauteilen 1 und 2 ist eine Öffnung vorgesehen, durch die die Halteelemente 15 und 16 bündig durchzuführen sind.

In Fig. 7 ist eine dritte Ausführungsform einer dreiteiligen Haltevorrichtung 33 gezeigt, wobei ein erstes Halteelement 26 in zwei weiteren baugleichen Halteelementen 25 und 27 verankert ist. Die Verankerung des Halteelements 26 in den Halteelementen 25 und 27 ist auch hier durch Rastzähne längs der Halteelemente vorgesehen, die sich formschlüssig ineinander verhaken, wobei das Halteelement 26 jeweils in die Öffnungen der Halteelemente 25 und 27 eingefügt wird, das heißt, dass die Rastzähne an den Halteelementen 25, 26 auf ihrer Innenseite und an dem Halteelement 26 jeweils an der Außenseite vorgesehen sind. Das Haltelement 27 besteht aus einem stiftförmigen Bereich, der sich durch die vorgesehenen Öffnungen in den Karosseriebauteilen 1 bewegen lässt und einem Kopfteil, der eine weitere Bewegung des Halteelements 27 durch diese Öffnungen verhindert. Das Halteelement 25, hier ebenfalls mit einem Kopf ausgebildet, ist an der Unterseite von Karosseriebauteil 2, hier in einer dafür vorgesehenen Vertiefung, fest angebracht. Das Halteelement 26 ist durchgängig stiftförmig in gleichbleibender Breite mit außenliegenden Rastzähnchen zur Verrastung in den Haltelementen 25,27 ausgeführt, so dass es jeweils mit etwa halber Gesamtlänge sowohl in das Haltelement 25 als auch in das Halteelement 27 eingeführt werden kann und somit die Karosseriebauteile positioniert. Bei dieser Variante ist es denkbar zunächst zwei Halteelemente 25 und 26 miteinander zu verbinden und anschließend das dritte Halteelement 27 zu positionieren. Das Karosseriedach 1 ist im Übergangsbereich der Karosseriebauteile 1, 2 unterhalb des Panoramadachs 2 mit einer dazwischen liegenden Schicht Kleber 6 angeordnet. In beiden Karosseriebauteilen 1 und 2 ist eine Öffnung vorgesehen, durch die die Halteelemente 25 und 27 bündig durchzuführen sind.

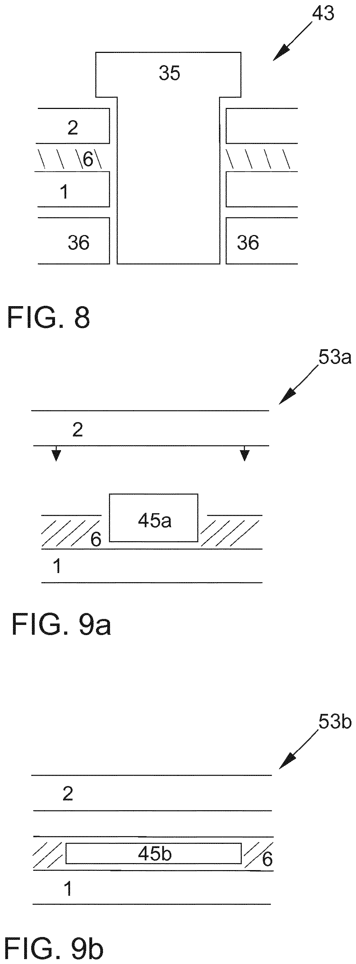

In Fig. 8 ist eine vierte Ausführungsform einer zweiteiligen Haltevorrichtung 43 gezeigt, wobei ein erstes Halteelement 35 in einem zweiten Halteelement 36 verankert ist. Die Verankerung der Haltelemente 35 und 36 ist hier durch Reibschluss vorgesehen, wobei das Halteelement 35 in eine Öffnung des Halteelementes 36 eingefügt wird und die Öffnung im Halteelement 36 gerade so groß ist, dass das Halteelement 35 mit einer Kraft größer als der Schwerkraft des oben liegenden Karosseriebauteils, hier die des Panoramadaches 2, in das Halteelement 36 gedrückt werden muss, so dass sich eine Presspassung ergibt. Das Haltelement 35 besteht aus einem stiftförmigen Bereich, der sich durch die vorgesehenen Öffnungen in den Karosseriebauteilen 1 und 2 bewegen lässt und einem Kopfteil, der eine weitere Bewegung des Halteelements 35 durch diese Öffnungen verhindert. Das Karosseriedach 1 ist im Übergangsbereich der Karosseriebauteile 1, 2 unterhalb des Panoramadachs 2 mit einer dazwischen liegenden Schicht Kleber 6 angeordnet. In beiden Karosseriebauteilen 1 und 2 ist eine Öffnung vorgesehen, durch die die Halteelemente 35 und 36 bündig durchzuführen sind. Die Haltevorrichtung 43 sichert mittels Reibschluss die Positionen der Karosseriebauteile zueinander, wobei hierbei ein ein-, zwei- oder dreiteiliger Aufbau der Haltevorrichtung ebenfalls möglich ist. Hierbei ist auch denkbar, dass die Halteelemente unterschiedliche Materialeigenschaften aufweisen, so dass ein zwischenliegendes Halteelement, wie in Fig. 7 mit dem Haltelement 26 vergleichbar, bei einer dreiteiligen Ausführung weicher ist als die andern beiden Halteelemente, so dass es derartige plastische Eigenschaften hat, dass beim Andrücken den beiden übrigen Halteelementen in der Form nachgibt. Bei den Haltevorrichtungen 43, die mittels Reibschluss die Positionierung der Karosseriebauteile sicherstellen, ist eine stufenlose Positionierung der Bauteile zueinander möglich.

In Fig. 9 ist eine fünfte Ausführungsform einer Haltevorrichtung 53 gezeigt, die die Positionierung der Karosseriebauteile mittels eines einzelnen plastisch verformbaren Halteelements 45a sicherstellt, wobei auch hier gewährleistet sein muss, dass keinerlei plastische Verformung durch die Gewichtskräfte der Karosseriebauteile, auch nicht über einen längeren Zeitraum, möglich sind. Das Halteelement 45a wird nach dem Fügevorgang durch die Verformung zu dem Halteelement 45b. Auch bei einer Haltevorrichtung 3 mit plastisch verformbaren Halteelementen ist eine stufenlose Positionierung möglich.

Es ist auch eine Kombination unterschiedlicher Ausführungen von Halteelementen denkbar um die Vorteile der jeweiligen Fügemöglichkeiten zu nutzen. Auch wenn an unterschiedlichen Fügebereichen der Karosseriebauteile unterschiedliche Kräfte wirken, so kann diesem Aspekt durch geeignete Auslegung der Haltevorrichtungen 3 Rechnung getragen werden. Es ist denkbar, dass die Ansprüche an die Lastaufnahmekapazität der Halteelemente unterschiedlich sind. Liegt beispielsweise die höchste Gewichtslast eines Karosseriebauteiles an einer ersten Stelle an, so kann an dieser Stelle eine zweiteilige Haltevorrichtung, die durch Formschluss oder Reibschluss die Positionierung sicherstellt vorgesehen werden, während an einer anderen Stelle, an der Gewichtskräfte des Karosseriebauteils keine oder nur eine geringe Rolle spielen ein plastisch verformbares einzelnes Halteelement als Haltevorrichtung vorgesehen werden kann, das lediglich die Aufgabe hat eine Positionierung sicherzustellen ohne große Kräfte aufnehmen zu müssen.

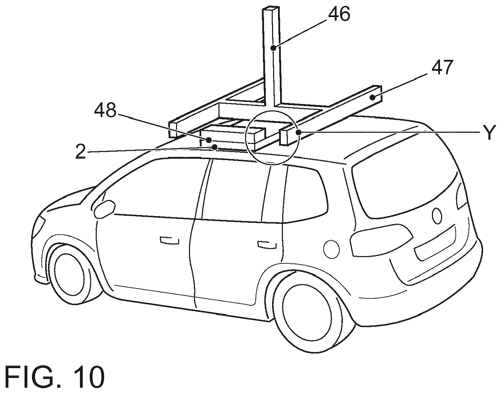

In Fig. 10 ist die Montage des Daches mittels eines Manipulators 46 gezeigt. Der Manipulator 46 weist ein zweiteiliges Greifmittel, einem äußeren Rahmen 47, der am Manipulator befestigt ist und einem inneren Rahmen 48 zur Halterung des Panoramadaches 2 auf. Vorteilhafterweise wird bei diesem Verfahren die Position des Panoramadaches 2 direkt an der Position des Karosseriedaches 1 referenziert. Das zweiteilige Greifmittel mit einem äußeren Rahmen 47 und einem inneren Rahmen 48 ist mit einem Mechanismus ausgestattet, der sich an der umgebenden Kontur referenziert. Sobald die Kontur des Karosseriedaches 1 berührt wird, ist durch diese Berührung die Endlage des Manipulators 46 festgelegt. Erfindungsgemäß fährt der äußere Rahmen 47 zunächst in eine vorzentrierte Position bis ein, an diesem Rahmen 47 angebrachter Referenzfühler 50 die Endlage des Hubes anzeigt. Anschließend wird der äußere Rahmen 47 genau hier blockiert, damit der innere Rahmen 48 in entgegengesetzter Richtung zum äußeren Rahmen 47 genau bis zu diesem gefahren werden kann und dort dann blockiert. Der Referenzfühler 50 kann mechanisch oder direkt gekoppelt sein. Es sind elektrische und pneumatische Sensoren denkbar, die indirekt mit dem Anschlag gekoppelt sind. Außerdem sind Haltevorrichtungen 3, 13, 23, 33, 43, 53 vorgesehen, die so angeordnet sind, dass sie zunächst wahlweise an einem der beiden Karosseriebauteile 1,2 angebracht werden und exakt ineinander verrasten während der innere Rahmen 48 in seine Zielposition gefahren wird, wozu sie exakt ausgerichtet sein müssen. In der Zielposition, das heißt, wenn der innere Rahmen 48 sich nicht mehr bewegt, stellen die Haltevorrichtung 3, 13, 23, 33, 43, 53 sicher, dass auch nach Entfernen der Bauteile aus den beiden Rahmen 47, 48 deren Positionierung zueinander unveränderlich bleibt.

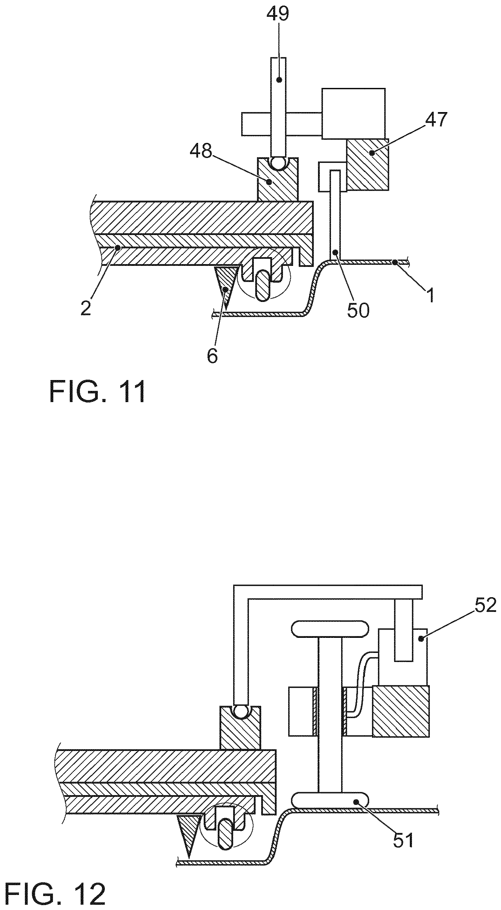

In Fig. 11 ist eine mögliche Detailansicht Y von Fig. 10 mittels eines Referenzfühlers 50 zur Steuerung eines Stellmotors 49 gezeigt, so dass eine exakte Positionierung des Panoramadaches 2 an der Fläche des Karosseriedaches 1 sichergestellt ist. Hierbei ist der Referenzfühler 50 am äußeren Rahmen 47 angebracht und bewegt sich zusammen mit diesem in Richtung Karosseriedach 1. Signalisiert der Referenzfühler 50 den angestrebten Abstand oder berührt er das Karosseriedach, je nach Ausführungsart, so stoppt der Stellmotor 49, der den äußeren Rahmen 47 samt Referenzfühler 50 bewegt. Der Referenzfühler 50 kann mechanisch, photoelektrisch, magnetisch, mittels eines Ultraschall-Sensors, mittels Messung mit dem Hall-Effekt oder anderen Messmethoden arbeiten. In der Folge fährt nun der innere Rahmen 48, der das Panoramadach 2 trägt, gegen den äußeren Rahmen 47, so dass eine exakte Positionierung beider Karosseriebauteile 1, 2 zueinander sichergestellt ist. Sind die Haltevorrichtungen 3, 13, 23, 33, 43, 53 in ihre Zielposition gebracht, so beginnt die Aushärtung des Klebers in der Kleberaupe 6 ohne dass sich die Position der Karosseriebauteile zueinander bis zur vollständigen Aushärtung noch verändern kann.

In Fig. 12 ist eine zweite mögliche Detailansicht Y von Fig. 10 mittels eines mechanisch gekoppelten Referenzfühlers 51 zur Steuerung eines Pneumatikzylinders 52 gezeigt, so dass eine exakte Positionierung des Panoramadaches 2 an der Fläche des Karosseriedaches 1 sichergestellt ist. Hierbei ist der Referenzfühler 51 am äußeren Rahmen 47 angebracht und bewegt sich zusammen mit diesem in Richtung Karosseriedach 1. Berührt der Referenzfühler 51 das Karosseriedach so stoppt der Pneumatikzylinder 52, der den äußeren Rahmen 47 samt Referenzfühler 51 bewegt, jede weitere Bewegung. In der Folge fährt nun der innere Rahmen 48, der das Panoramadach 2 trägt, gegen den äußeren Rahmen 47, so dass eine exakte Positionierung beider Karosseriebauteile 1, 2 zueinander sichergestellt ist. Sind die Haltevorrichtungen 3, 13, 23, 33, 43, 53 in ihre Zielposition gebracht, so beginnt die Aushärtung des Klebers in der Kleberaupe 6 ohne dass sich die Position der Karosseriebauteile zueinander bis zur vollständigen Aushärtung noch verändern kann.

Die Erfindung beschränkt sich in Ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten, räumliche Anordnungen und Verfahrensschritte, können sowohl für sich als auch in den verschiedensten Kombinationen erfindungswesentlich sein.

### Bezugszeichenliste

- 1,2: Karosseriebauteil
- 3, 13, 23, 33, 43, 53a, 53b: Haltevorrichtung
- 5,15,16,25,26,27,35,36,45a,45b: Halteelement
- 6: Klebefläche
- 46: Manipulator
- 47: äußerer Rahmen
- 48: innerer Rahmen
- 49: Stellmotor
- 50, 51: Referenzfühler
- 52: Pneumatikzylinder

## Patentansprüche

1. Fügeanordnung von mindestens zwei Karosseriebauteilen (1,2) eines Fahrzeuges mit einem ersten Fügebauteil und zumindest einem zweiten Fügebauteil, wobei mindestens eine Haltevorrichtung (3) zur arretierbaren Verbindung vorgesehen ist, und zusätzlich zu der zumindest einen Haltevorrichtungen mindestens eine Klebestelle (6) an den Fügebereichen der Fügebauteile vorgesehen ist, so dass zumindest in einem Bereich miteinander verklebte Fügebauteile in ihrer Positionierung zueinander während des Aushärtevorgangs des Klebers durch die Haltevorrichtung (3) fixiert sind,
**dadurch gekennzeichnet, dass** zumindest eine Haltevorrichtung einen Stift (25) und ein Gegenstück (27) aufweist, die über ein dazwischenliegendes Halteelement (26) miteinander verbunden sind.

2. Fügeanordnung nach Anspruch 1 **dadurch gekennzeichnet, dass** zumindest zwei oder drei, vorzugsweise vier Haltevorrichtungen (3) vorgesehen sind.

3. Fügeanordnung nach zumindest einem der Ansprüche 1 bis 2 **dadurch gekennzeichnet, dass** zumindest eine Haltevorrichtung einen Stift (5) und einen Aufnahmeraum aufweist.

4. Fügeanordnung nach zumindest einem der Ansprüche 1 bis 3 **dadurch gekennzeichnet, dass** zumindest eine Haltevorrichtung (3) durch formschlüssiges Rasten und/oder reibschlüssig und/oder durch plastische Verformung und/oder durch chemische Reaktion einer Ein- oder Mehrkomponentenmasse miteinander verbunden sind.

5. Fügeanordnung nach zumindest einem der Ansprüche 1 bis 4 **dadurch gekennzeichnet, dass** zumindest eine Haltevorrichtung (3) ein - oder mehrteilig ausgelegt ist.

6. Fügeanordnung nach zumindest einem der Ansprüche 1 bis 5 **dadurch gekennzeichnet, dass** zumindest eine Haltevorrichtung einen Stift (15) und ein dazu passendes Halteelement (16) aufweist.

7. Fügeanordnung nach einem der vorhergehenden Ansprüche **dadurch gekennzeichnet, dass** die Karosseriebauteile (1,2) Teil eines Fahrzeugdaches (1), insbesondere eines Panoramadaches (2) sind.

8. Verfahren zum Fügen von mindestens zwei Karosseriebauteilen (1,2) eines Fahrzeuges mit einer Fügeanordnung gemäß einem der Ansprüche 1 bis 7, **gekennzeichnet durch** die Schritte:
• Auftragen eines Klebers (6) auf mindestens einem ersten Karosseriebauteil an zumindest einer Klebestelle in dem zu fügenden Bereich
• Positionierung eines zweiten Karosseriebauteiles unter Benetzung mit dem Kleber (6) und Arretierung des ersten und zweiten Karosseriebauteils zueinander mittels mindestens einer Haltevorrichtung (3)
• Aushärten des Klebers (6) unter Beibehaltung der Position

9. Verfahren nach Anspruch 8, **dadurch gekennzeichnet, dass** die Positionierung der Karosseriebauteile zueinander mittels eines Manipulators (46) oder Roboters erfolgt.

10. Verfahren nach Anspruch 8 oder 9 **dadurch gekennzeichnet, dass** die Positionierung der Karosseriebauteile zueinander mittels elektrischer Sensoren (50) und/oder photoelektrischer Sensoren und/oder pneumatischer Sensoren und/oder eine Abstandsdetektion mittels der Messung mittels des Hall-Effekts gesteuert wird.

11. Verfahren nach Anspruch 8 oder 9 **dadurch gekennzeichnet, dass** die Positionierung der Karosseriebauteile zueinander durch ein zweiteiliges Greifmittel, bestehend aus einem Innen- (48) und einem Außenrahmen (47) mit einem Mechanismus versehen ist, der die Endlage des Manipulators (46) festlegt, so dass an der umgebenden Kontur referenziert wird.

12. Verfahren nach Anspruch 8, 9, 10 oder 11 **dadurch gekennzeichnet, dass** es sich bei den beschriebenen Karosseriebauteilen um den Zusammenbau eines Fahrzeugdaches (1) mit einem Panoramadach (2) handelt.

## Claims

1. A joint arrangement of at least two body components (1, 2) of a vehicle having a first joint component and at least a second joint component, wherein at least one holding device (3) is provided for the lockable connection, and in addition to the at least one holding device at least one adhesive point (6) is provided on the joint regions of the joint components, so that at least in one region joint components glued together are fixed by the holding device (3) in their positioning relative to each other during the curing process of the adhesive,
**characterized in that** at least one holding device has a pin (25) and a counterpart (27), which are connected to each other via a holding element (26) lying in between.

2. The joint arrangement according to Claim 1 **characterized in that** at least two or three, preferably four holding devices (3) are provided.

3. The joint arrangement according to at least one of Claims 1 to 2 **characterized in that** at least one holding device has a pin (5) and an accommodation space.

4. The joint arrangement according to at least one of Claims 1 to 3 **characterized in that** at least one holding device (3) are connected to one another by positive engagement and/or by frictional engagement and/or by plastic deformation and/or by chemical reaction of a single or multi-component substance.

5. The joint arrangement according to at least one of Claims 1 to 4 **characterized in that** at least one holding device (3) is designed to consist of one or more parts.

6. The joint arrangement according to at least one of Claims 1 to 5 **characterized in that** at least one holding device has a pin (15) and a matching holding element (16).

7. The joint arrangement according to any one of the preceding claims **characterized in that** the body components (1, 2) are part of a vehicle roof (1), in particular a panoramic roof (2).

8. A method for joining at least two body components (1, 2) of a vehicle with a joint arrangement according to any one of Claims 1 to 7, **characterized by** the steps:
• Application of an adhesive (6) on at least one first body component at at least one adhesive point in the region to be joined,
• Positioning of a second body component wetted with the adhesive (6) and locking of the first and second body component relative to each other by means of at least one holding device (3)
• Curing of the adhesive (6) while maintaining the position.

9. The method according to Claim 8, **characterized in that** the positioning of the body components relative to one another takes place by means of a manipulator (46) or robot.

10. The method according to Claim 8 or 9 **characterized in that** the positioning of the body components relative to one another is controlled by means of electric sensors (50) and/or photoelectric sensors and/or pneumatic sensors and/or a distance detection by means of the measurement by means of the Hall effect.

11. The method according to Claim 8 or 9 **characterized in that** the positioning of the body components relative to one another is provided by a two-part gripping means, consisting of an inner- (48) and an outer frame (47) with a mechanism, which determines the end position of the manipulator (46), so that reference is made to the surrounding contour.

12. The method according to Claim 8, 9, 10 or 11 **characterized in that** the described body components are the assembly of a vehicle roof (1) with a panoramic roof (2).

## Revendications

1. Ensemble d'assemblage d'au moins deux composants de carrosserie (1, 2) d'un véhicule avec un premier composant d'assemblage et au moins un deuxième composant d'assemblage, dans lequel il est prévu au moins un dispositif de retenue (3) destiné au raccordement blocable, et au moins un emplacement de collage (6) est prévu sur les zones d'assemblage des composants d'assemblage en plus du au moins un dispositif de retenue (3) de telle sorte que, au moins dans une zone, des composants d'assemblage collés les uns aux autres sont fixés par le dispositif de retenue (3) dans leur positionnement les uns par rapport aux autres pendant le processus de durcissement de la colle,
**caractérisé en ce qu'**au moins un dispositif de retenue comporte une broche (25) et une contre-pièce (27) qui sont raccordées l'une à l'autre par le biais d'un élément de retenue (26) situé en position intermédiaire.

2. Ensemble d'assemblage selon la revendication 1, **caractérisé en ce qu'**au moins deux ou trois, de préférence quatre, dispositifs de retenue (3) sont prévus.

3. Ensemble d'assemblage selon au moins l'une des revendications 1 à 2, **caractérisé en ce qu'**au moins un dispositif de retenue comporte une broche (5) et un espace de réception.

4. Ensemble d'assemblage selon au moins l'une des revendications 1 à 3, **caractérisé en ce qu'**au moins plusieurs dispositifs de retenue (3) sont raccordés les uns aux autres par encliquetage par liaison de forme et/ou par liaison de friction et/ou par déformation plastique et/ou par réaction chimique d'une masse à un ou plusieurs composants.

5. Ensemble d'assemblage selon au moins l'une des revendications 1 à 4, **caractérisé en ce qu'**au moins un dispositif de retenue (3) est conçu en une ou plusieurs parties.

6. Ensemble d'assemblage selon au moins l'une des revendications 1 à 5, **caractérisé en ce qu'**au moins un dispositif de retenue comporte une broche (15) et un élément de retenue (16) qui lui est adapté.

7. Ensemble d'assemblage selon l'une des revendications précédentes, **caractérisé en ce que** les composants de carrosserie (1, 2) font partie d'un toit de véhicule (1), en particulier d'un toit panoramique (2).

8. Procédé d'assemblage d'au moins deux composants de carrosserie (1, 2) d'un véhicule avec un ensemble d'assemblage selon l'une des revendications 1 à 7, **caractérisé par** les étapes :
• application d'une colle (6) sur au moins un premier composant de carrosserie dans un emplacement de collage dans la zone à assembler
• positionnement d'un deuxième composant de carrosserie avec humectation avec la colle (6) et blocage du premier et du deuxième composant de carrosserie l'un par rapport à l'autre au moyen d'au moins un dispositif de retenue (3)
• durcissement de la colle (6) avec conservation de la position.

9. Procédé selon la revendication 8, **caractérisé en ce que** le positionnement des composants de carrosserie les uns par rapport aux autres s'effectue au moyen d'un manipulateur (46) ou d'un robot.

10. Procédé selon la revendication 8 ou 9, **caractérisé en ce que** le positionnement des composants de carrosserie les uns par rapport aux autres est commandé au moyen de capteurs (50) électriques et/ou de capteurs photoélectriques et/ou de capteurs pneumatiques, et/ou une détection de distance est commandée au moyen de la mesure au moyen de l'effet Hall.

11. Procédé selon la revendication 8 ou 9, **caractérisé en ce que** le positionnement des composants de carrosserie les uns par rapport aux autres par un moyen de préhension en deux parties, composé d'un cadre intérieur (48) et d'un cadre extérieur (47), est muni d'un mécanisme qui immobilise la position extrême du manipulateur (46) de telle sorte qu'une référence est effectuée sur le contour périphérique.

12. Procédé selon la revendication 8, 9, 10 ou 11, **caractérisé en ce que**, en ce qui concerne les composants de carrosserie décrits, il s'agit de l'assemblage d'un toit de véhicule (1) avec un toit panoramique (2).
